# EUROPÄISCHE PATENTANMELDUNG

(11) **EP 4 506 766 A1**
(43) Veröffentlichungstag der Anmeldung: **12.02.2025**
(21) Anmeldenummer: 23190187.7
(22) Anmeldetag: 08.08.2023
(51) Int. Cl.: G05B 19/042

(54) **REDUNDANZ AUF BASIS EINES ENG GEKOPPELTEN DIGITALEN ZWILLINGS**

(71) Anmelder: Siemens Aktiengesellschaft, 80333 München (DE)
(72) Erfinder: Weiler, Christoph, 75015 Bretten (DE)
(74) Vertreter: Siemens Patent Attorneys

(57) **Zusammenfassung**

Vorgeschlagen wird ein Verfahren zum Betreiben einer technischen Anlage (2), für die zuvor eine Automatisierung erstellt worden ist, wobei die Automatisierung auf einem ersten Rechensystem (3) implementiert ist, umfassend:
a) Vor dem Betreiben der technischen Anlage (2), Erzeugen eines digitalen Zwillings (6) der technischen Anlage (2), welcher einen digitalen Zwilling (6) der Automatisierung umfasst,
b) Implementieren des digitalen Zwillings (6) der technischen Anlage (2) auf einem zweiten, von dem ersten Rechensystem (3) physikalisch getrennten Rechensystem (4),
c) Kommunikatives Koppeln des zweiten Rechensystems (4) mit dem ersten Rechensystem (3) mit der hierauf implementierten Automatisierung,
d) Beim Betreiben der technischen Anlage (2) und während des Ablaufs der Automatisierung, Verwenden des digitalen Zwillings (6) der technischen Anlage (2) zur Realisierung einer Redundanz für die auf dem ersten Rechensystem (3) implementierte und ablaufende Automatisierung.

## Beschreibung

Die Erfindung betrifft ein Verfahren zum Betreiben einer technischen Anlage. Außerdem betrifft die Erfindung ein Leitsystem mit einem ersten Rechensystem und einem zweiten Rechensystem.

Immer mehr Funktionalität einer Automatisierungslösung wird in Form von Software realisiert. In der Vergangenheit waren dies vor allem das Steuerungsprogramm auf der PLC, das SCADA/HMI System auf zusätzlichen PCs und verschiedene weitere Softwarelösungen, die zur Optimierung einer Produktion beitragen. Inzwischen kommen vermehrt komplett virtualisierte PLCs (vPLC) und beliebige Software, die auf Embedded Hardware, in der Edge oder in der Cloud ausgeführt wird, im Rahmen von Automatisierungslösungen zum Einsatz.

Bisher hat man die Teile einer Automatisierung, die als kritisch betrachtet wurden und die deshalb hoch verfügbar sein mussten, in mehrfacher (meist doppelter) Form bereitgestellt. Typisches Beispiel ist eine R/H-Steuerung, bei der eine erste Steuerung die Anlage betreibt. Nur wenn diese ausfällt, springt eine zweite Steuerung nahtlos ein und betreibt die Anlage weiter, so dass es zu keinem Anlagenstillstand kommt.

In der EP 3 418 833 A1 ist ein Verfahren zum Zugriff eines ersten Computers auf zumindest eine auf einer virtuellen Maschine eines zweiten Computers installierte Anwendung im Kontext einer industriellen Automatisierung offenbart.

Der Erfindung liegt die Aufgabe zugrunde, ein Verfahren zum Betreiben einer technischen Anlage anzugeben, welches effizient und ressourcenschonend eine für eine Ausfallsicherheit notwendige Redundanz in der Automatisierung bereitstellt.

Die zuvor formulierte Aufgabe wird durch ein Verfahren zum Betreiben einer technischen Anlage mit den Merkmalen des Anspruchs 1 gelöst. Außerdem wird die zuvor formulierte Aufgabe durch Leitsystem mit einem ersten Rechensystem und einem zweiten Rechensystem gemäß Anspruch 10 gelöst. Vorteilhafte Weiterbildungen sind Gegenstand der abhängigen Ansprüche.

Ein erfindungsgemäßes Verfahren zum Betreiben einer technischen Anlage, für die zuvor eine Automatisierung erstellt worden ist, wobei die Automatisierung auf einem ersten Rechensystem implementiert ist, umfasst die folgenden Verfahrensschritte:
a) Vor dem Betreiben der technischen Anlage, Erzeugen eines digitalen Zwillings der technischen Anlage, welcher einen digitalen Zwilling der Automatisierung umfasst,
b) Implementieren des digitalen Zwillings der technischen Anlage auf einem zweiten, von dem ersten Rechensystem physikalisch getrennten Rechensystem,
c) Kommunikatives Koppeln des zweiten Rechensystems mit dem ersten Rechensystem mit der hierauf implementierten Automatisierung,
d) Beim Betreiben der technischen Anlage und während der Automatisierung, Verwenden des digitalen Zwillings der technischen Anlage zur Realisierung einer Redundanz für die auf dem ersten Recheneinheit implementierte und ablaufende Automatisierung.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Teil des Leitsystems oder Steuerungsmoduls oder einer technischen Anlage ist zumindest eine Datenbank oder ein Archiv, in dem historische Daten abgespeichert sind.

Unter einer Automatisierung wird die selbständige (automatisierte) Erfassung und Beeinflussung physikalischer Größen mithilfe technischer Mittel verstanden. Dabei werden in der Regel Maschinen, Anlagen oder sonstige Einrichtungen in die Lage versetzt, selbsttätig zu arbeiten. Die Automatisierung umfasst wenigstens eine Parametrierung der Komponenten der Anlage und eine Interaktion der Komponenten mit weiteren Komponenten. Die Automatisierung nutzt zur Realisierung der Automatisierungsfunktionalität ein erstes Rechensystem. Dieses kann beispielsweise eine speicherprogrammierbare Steuerung sein, die eine übergeordnete Steuerungsfunktion für untergeordnete Steuerungen, Sensoren oder Aktoren darstellt.

Es wird davon ausgegangen, dass für die technische Anlage bereits eine Automatisierung für einen automatisierten Betrieb der technischen Anlage erstellt worden ist. Hierfür kann ein entsprechendes Projektierungswerkzeug wie der SIMATIC Manager Server der Firma SIEMENS verwendet worden sein. Hierbei kann mithilfe von vorgefertigten Bausteinen und Plänen mittels eines Engineering Station Servers ein Zusammenspiel von automatisierungstechnischen Geräten und Einrichtungen der technischen Anlage entworfen werden.

Bevor die technische Anlage betrieben wird, wird ein digitaler Zwilling der technischen Anlage erzeugt und auf einem zweiten, von dem ersten Rechensystem physikalisch getrennten Rechensystem implementiert. Der digitale Zwilling wird dabei als eine virtuelle Abbildung der technischen Anlage verstanden, welche den Aufbau der technischen Anlage mit deren Anlagenkomponenten sowie den Wechselwirkungen zwischen den Anlagenkomponenten widerspiegelt. Der digitale Zwilling der technischen Anlage umfasst dabei den digitalen Zwilling der zuvor erstellten Automatisierung. Es wird weiterhin davon ausgegangen, dass der digitale Zwilling für einen bidirektionalen Informationsfluss mit der realen technischen Anlage ausgebildet ist, um einen möglichst exakten Zustand der technischen Anlage abbilden zu können. Für eigentliche Erstellung des digitalen Zwillings sind zahlreiche Methoden bekannt, die aber in diesem Rahmen nicht näher erläutert werden.

Um einen Datenaustausch zwischen dem zweiten Rechensystem mit dem hierauf implementierten digitalen Zwilling der Automatisierung und dem ersten Rechensystem mit der hierauf implementierten realen Automatisierung zu ermöglichen, werden die beiden Rechensysteme kommunikativ gekoppelt. Nach dem Herstellen der Kopplung kann die in Software realisierte Automatisierung aus dem Digitalen Zwilling in gleicher Weise mit der realen technischen Anlage interagieren wie die Automatisierung der realen technischen Anlage. Die beiden Instanzen der Automatisierung werden zudem auf unterschiedlicher Hardware (zwei physikalisch getrennte Rechensysteme) ausgeführt, wodurch eine echte Redundanz geschaffen wird. Hierfür wird gegenüber dem Stand der Technik keine zusätzliche Hardware benötigt, da man den üblicherweise sowieso eingesetzten digitalen Zwilling der technischen Anlage auf besonders vorteilhafte Art und Weise für die Realisierung der Redundanz verwendet. Mit anderen Worten wird das zweite Rechensystem, das sowieso schon für die Implementierung des digitalen Zwillings der technischen Anlage verwendet wird, auf besonders vorteilhafte Art und Weise für die Realisierung der Redundanz der Automatisierung verwendet, ohne dass hierfür eine zusätzliche Hardware vonnöten wäre.

Die zuvor formulierte Aufgabe wird zudem gelöst durch ein Verfahren zum Betreiben einer technischen Anlage, für die zuvor eine Automatisierung erstellt worden ist, wobei die Automatisierung auf einem ersten Rechensystem implementiert ist, das Verfahren umfassend:
a) Vor dem Betreiben der technischen Anlage, Erzeugen eines digitalen Zwillings der technischen Anlage, welcher einen digitalen Zwilling der Automatisierung umfasst,
b) Implementieren des digitalen Zwillings der technischen Anlage auf einem zweiten, von dem ersten Rechensystem physikalisch getrennten Rechensystem,
c) Kommunikatives Koppeln des zweiten Rechensystems mit dem ersten Rechensystem mit der hierauf implementierten Automatisierung,
d) Beim Betreiben der technischen Anlage und während des Ablaufs der Automatisierung, Verwenden des digitalen Zwillings der technischen Anlage, um einen ausgefallenen Sensor der Automatisierung für die technische Anlage zu ersetzen, derart, dass mittels des digitalen Zwillings Sensormesswerte des ausgefallenen Sensors simulativ erzeugt und an die Automatisierung übermittelt werden.

Der digitale Zwilling der technischen Anlage kann auch für eine weitere Anwendung vorteilhafterweise verwendet werden: Beim Ausfall eines (realen) Sensors kann, während der Sensor ausgetauscht wird, der digitale Zwilling der Automatisierung Sensormesswerte des ausgefallenen Sensors simulativ erzeugen, um einen Weiterbetrieb der technischen Anlage zu ermöglichen.

Bevorzugt umfasst die Automatisierung eine Steuerungsfunktionalität, die auf dem ersten Rechensystem implementiert ist, und bei der der erzeugte und auf dem zweiten Rechensystem implementierte digitale Zwilling auch einen digitalen Zwilling der Steuerungsfunktionalität umfasst, wobei beim Betreiben der technischen Anlage und während des Ablaufs der Steuerungsfunktionalität der digitale Zwilling der Steuerungsfunktionalität zur Realisierung einer Redundanz für die auf dem ersten Rechensystem implementierte und ablaufende Steuerungsfunktionalität verwendet wird. Während der digitale Zwilling hier die Funktionalitäten des Steuerns der technischen Anlage vorteilhafterweise übernehmen kann, kann der digitale Zwilling bei weiteren Ausprägungen der Erfindung Funktionalitäten einer Geräteverwaltung, eines Datenarchivservers, einer Bedienung und Beobachtung oder einer Netzwerkverwaltung übernehmen.

Im Rahmen einer bevorzugten Weiterbildung der zuvor beschriebenen Verfahren umfassen diese die folgenden Schritte:
i) Beim Betreiben der technischen Anlage und während des Ablaufs der Automatisierung oder der Steuerungsfunktionalität Integrieren einer Softwaremodifikation in den digitalen Zwilling der technischen Anlage,
ii) Unterbrechen des Ablaufs der Automatisierung oder der Steuerungsfunktionalität,
iii)Übernahme der Funktionalität der Automatisierung oder der Funktionalität der Steuerungsfunktionalität durch den digitalen Zwilling der technischen Anlage,
iv) Integrieren der Softwaremodifikation in die Automatisierung oder die Steuerungsfunktionalität,
v) Wiederaufnahme des Ablaufs der Automatisierung oder der Steuerungsfunktionalität und Übernahme der Funktionalität durch die Automatisierung oder die Steuerungsfunktionalität.

Die Automatisierung bzw. die Steuerungsfunktionalität der Automatisierung (bzw. analog dazu andere Bestandteile der Automatisierung wie das Bedienen und Beobachten) können auf diese Art und Weise einfach in den aktuellen Softwarestand versetzt werden, ohne dass hierfür ein Stillstand der technischen Anlage vonnöten wäre. Zudem kann die Softwaremodifikation zunächst im digitalen Zwilling getestet und so etwaige Komplikationen identifiziert werden.

Die kommunikative Kopplung zwischen dem ersten Rechensystem und dem zweiten Rechensystem erfolgt bevorzugt gemäß einem Time-Sensitive Networking (TSN) oder einem Deterministic Networking (DetNet) Standard. Das Time-Sensitive Networking kann dann zum Einsatz kommen, wenn sich das erste Rechensystem und das zweite Rechensystem in einem lokalen Netzwerk der technischen Anlage befinden. Ist das zweite Rechensystem in einem anderen Netzwerk, ggf. in einem cloudbasierten Netzwerk befindlich, können Deterministic Network Verfahren zum Einsatz kommen. Durch den Einsatz dieser Verfahren kann die kommunikative Kopplung zwischen den Rechensystemen, also zwischen der Automatisierung für die reale technische Anlage und dem digitalen Zwilling, hochverfügbar ausgebildet werden. Mit anderen Worten kann der digitale Zwilling durch den Einsatz der genannten Kommunikationsverfahren in guter Näherung genauso mit der technischen Anlage interagieren wie die (reale) Automatisierung. Eine Latenz der Kopplung zwischen dem ersten Rechensystem und dem zweiten Rechensystem kann dabei weniger als 10 Millisekunden, vorzugsweise weniger als 1 Millisekunde betragen.

Dabei muss nicht die gesamte Kommunikation zwischen dem ersten Rechensystem und dem zweiten Rechensystem derart hochverfügbar ausgebildet sein. Ein erster Teil der Kopplung zwischen dem ersten Rechensystem und dem zweiten Rechensystem kann zur Realisierung der Redundanz gemäß einem Time-Sensitive Networking (TSN) oder einem Deterministic Networking (DetNet) Standard, und ein zweiter Teil der Kopplung zwischen dem ersten Rechensystem und dem zweiten Rechensystem kann gemäß einem nicht-deterministischen Verfahren erfolgen. Der zweite Teil kann Daten oder allgemeine Informationen betreffen, die nicht stets aktuell zur Verfügung stehen müssen. Der zweite Teil der Kopplung kann insbesondere für weniger echtzeitkritische Dienste zur Anwendung kommen, die beispielsweise der Konfiguration der Kommunikation, der Sicherheit, der Archivierung oder der intelligenten Überwachung dienen. Die Nutzung dieser Dienste aus dem digitalen Zwilling ist zu Redundanzzwecken auf Basis etablierter Mechanismen aus der Container/Kubernetes-Welt möglich. Entsprechende Dienste können in Form von Containern (z.B. als Edge App) realisiert werden und können so gleichzeitig im digitalen Zwilling und in der realen technischen Anlage genutzt werden, was die Redundanz erzeugt. Diese Art der Ausbildung der Kopplung ist besonders ressourcenschonend, da die hochverfügbare Kopplung nicht auf der ganzen Breite der Kopplung realisiert werden muss.

Eine Latenz des ersten Teils der Kopplung zwischen dem ersten Rechensystem und dem zweiten Rechensystem kann weniger als 1 Millisekunde betragen. Der zweite Teil der Kopplung kann einen deutlich höheren Latenzwert aufweisen, vorzugsweise mehr als 10 Millisekunden, höchst vorzugsweise mehr als 100 Millisekunden.

Bevorzugt befindet sich das erste Rechensystem innerhalb der technischen Anlage, während das zweite Rechensystem in einer cloudbasierten Umgebung realisiert ist. Durch die räumliche und infrastrukturelle Trennung der beiden Rechensysteme kann die Wahrscheinlichkeit weiter verringert werden, dass beide Rechensysteme gleichzeitig ausfallen und ein Weiterbetrieb der technischen Anlage nicht mehr möglich ist.

Die zuvor formulierte Aufgabe wird zudem gelöst durch ein Leitsystem mit einem ersten Rechensystem und einem zweiten Rechensystem, das dazu ausgebildet ist, ein Verfahren wie zuvor erläutert durchzuführen. Unter einem Leitsystem wird im vorliegenden Kontext ein computergestütztes, technisches System verstanden, das Funktionalitäten zum Darstellen, Bedienen und Leiten einer technischen Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: ein erfindungsgemäßes Leitsystem für eine technische Anlage in einer Prinzipskizze; und
- FIG 2: ein Ablaufdiagramm eines erfindungsgemäßen Verfahrens.

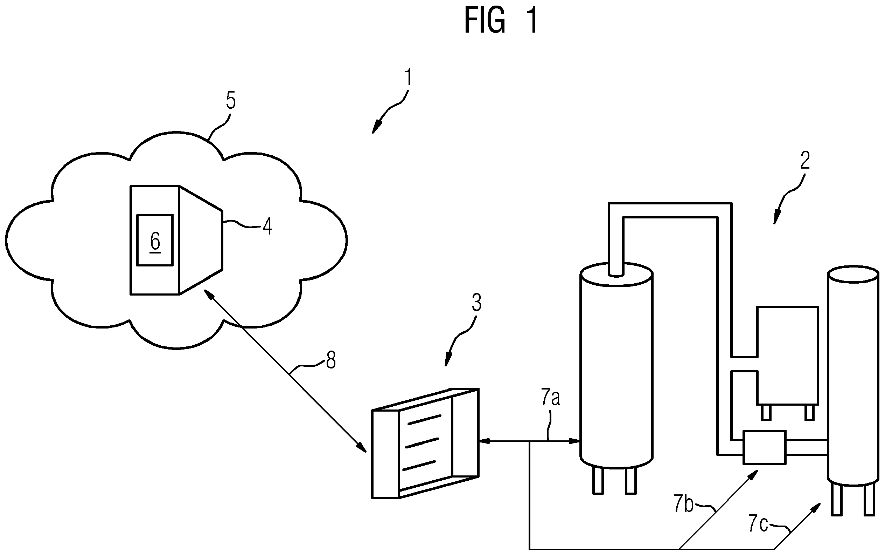

In FIG 1 ist ein Leitsystem 1 für eine technische Anlage 2 mit einem ersten Rechensystem 3 und einem zweiten Rechensystem 4 dargestellt. Das erste Rechensystem 1 implementiert eine Steuerungsfunktionalität für die technische Anlage 2 und weist hierfür entsprechende Verbindungen 7a, 7b, 7c zu der technischen Anlage 2 auf. Das zweite Rechensystem 4 ist in einer cloudbasierten Umgebung 5 implementiert und weist einen digitalen Zwilling 6 der technischen Anlage 2 auf. Das erste Rechensystem 3 und das zweite Rechensystem 4 sind über eine auf einem Time-Sensitive Networking (TSN) basierende Kommunikationsverbindung 8 miteinander gekoppelt.

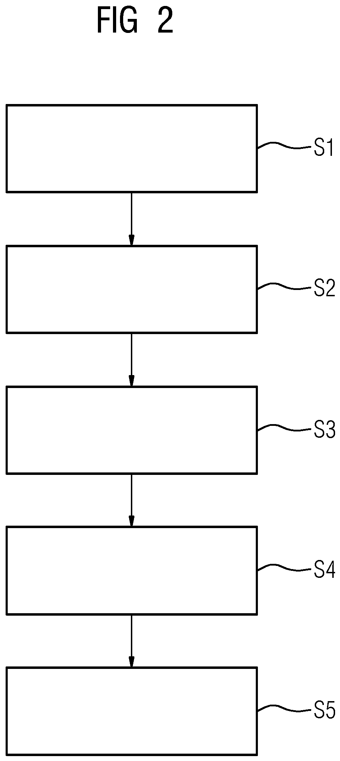

In FIG 2 ist der Ablauf eines erfindungsgemäßen Verfahrens schematisch dargestellt. In einem ersten Schritt S1 wird, vor dem Betreiben der technischen Anlage 2, der digitale Zwilling 6 der technischen Anlage 2 erzeugt und auf dem zweiten Rechensystem 4 implementiert. Dieser digitale Zwilling 6 umfasst einen digitalen Zwilling der Automatisierung. In einem zweiten Schritt S2, welcher auch vor dem ersten Schritt S1 erfolgen kann, werden das zweite Rechensystem 4 und das erste Rechensystem 3 kommunikativ über die auf einem Time-Sensitive Networking basierende Kommunikationsverbindung 8 miteinander gekoppelt.

In einem dritten Schritt S3 wird die technische Anlage 2 betrieben, die Automatisierung zum Ablauf gebracht und eine Softwaremodifikation in den digitalen Zwilling 6 integriert. In einem vierten Schritt S4 wird der Ablauf der Automatisierung auf dem ersten Rechensystem 3 unterbrochen und die Funktionalität der Automatisierung wird durch den digitalen Zwilling 6 übernommen. In einem fünften Schritt S5 wird schließlich die Softwaremodifikation in der Automatisierung auf dem ersten Rechensystem 3 integriert und es erfolgt schließlich eine Wiederaufnahme des Ablaufs der Automatisierung auf dem ersten Rechensystem 3.

Obwohl die Erfindung im Detail durch das bevorzugte Ausführungsbeispiel und die Figuren näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer technischen Anlage (2), für die zuvor eine Automatisierung erstellt worden ist, wobei die Automatisierung auf einem ersten Rechensystem (3) implementiert ist, umfassend:
a) Vor dem Betreiben der technischen Anlage (2), Erzeugen eines digitalen Zwillings (6) der technischen Anlage (2), welcher einen digitalen Zwilling (6) der Automatisierung umfasst,
b) Implementieren des digitalen Zwillings (6) der technischen Anlage (2) auf einem zweiten, von dem ersten Rechensystem (3) physikalisch getrennten Rechensystem (4),
c) Kommunikatives Koppeln des zweiten Rechensystems (4) mit dem ersten Rechensystem (3) mit der hierauf implementierten Automatisierung,
d) Beim Betreiben der technischen Anlage (2) und während des Ablaufs der Automatisierung, Verwenden des digitalen Zwillings (6) der technischen Anlage (2) zur Realisierung einer Redundanz für die auf dem ersten Rechensystem (3) implementierte und ablaufende Automatisierung.

2. Verfahren zum Betreiben einer technischen Anlage (2), für die zuvor eine Automatisierung erstellt worden ist, wobei die Automatisierung auf einem ersten Rechensystem (3) implementiert ist, umfassend:
a) Vor dem Betreiben der technischen Anlage (2), Erzeugen eines digitalen Zwillings (6) der technischen Anlage (2), welcher einen digitalen Zwilling (6) der Automatisierung umfasst,
b) Implementieren des digitalen Zwillings (6) der technischen Anlage (2) auf einem zweiten, von dem ersten Rechensystem (3) physikalisch getrennten Rechensystem (4),
c) Kommunikatives Koppeln des zweiten Rechensystems (4) mit dem ersten Rechensystem (3) mit der hierauf implementierten Automatisierung,
d) Beim Betreiben der technischen Anlage (2) und während des Ablaufs der Automatisierung, Verwenden des digitalen Zwillings (6) der technischen Anlage (2), um einen ausgefallenen Sensor der Automatisierung für die technische Anlage (2) zu ersetzen, derart, dass mittels des digitalen Zwillings (6) Sensormesswerte des ausgefallenen Sensors simulativ erzeugt und an die Automatisierung übermittelt werden.

3. Verfahren nach Anspruch 1 oder 2, bei dem die Automatisierung eine Steuerungsfunktionalität umfasst, die auf dem ersten Rechensystem (3) implementiert ist, und bei der der erzeugte und auf dem zweiten Rechensystem (4) implementierte digitale Zwilling (6) auch einen digitalen Zwilling (6) der Steuerungsfunktionalität umfasst, wobei beim Betreiben der technischen Anlage (2) und während des Ablaufs der Steuerungsfunktionalität der digitale Zwilling (6) der Steuerungsfunktionalität zur Realisierung einer Redundanz für die auf dem ersten Rechensystem (3) implementierte und ablaufende Steuerungsfunktionalität verwendet wird.

4. Verfahren nach einem der vorangegangenen Ansprüche, umfassend:
i) Beim Betreiben der technischen Anlage (2) und während des Ablaufs der Automatisierung oder der Steuerungsfunktionalität Integrieren einer Softwaremodifikation in den digitalen Zwilling (6) der technischen Anlage (2),
ii) Unterbrechen des Ablaufs der Automatisierung oder der Steuerungsfunktionalität,
iii)Übernahme der Funktionalität der Automatisierung oder der Funktionalität der Steuerungsfunktionalität durch den digitalen Zwilling (6) der technischen Anlage (2),
iv) Integrieren der Softwaremodifikation in die Automatisierung oder die Steuerungsfunktionalität,
v) Wiederaufnahme des Ablaufs der Automatisierung oder der Steuerungsfunktionalität und Übernahme der Funktionalität durch die Automatisierung oder die Steuerungsfunktionalität.

5. Verfahren nach einem der vorangegangenen Ansprüche, bei dem die kommunikative Kopplung zwischen dem ersten Rechensystem (3) und dem zweiten Rechensystem (4) gemäß einem Time-Sensitive Networking (TSN) oder einem Deterministic Networking (DetNet) Standard erfolgt.

6. Verfahren nach Anspruch 4, bei dem ein erster Teil der Kopplung zwischen dem ersten Rechensystem (3) und dem zweiten Rechensystem (4) gemäß einem Time-Sensitive Networking (TSN) oder einem Deterministic Networking (DetNet) Standard und ein zweiter Teil der Kopplung (8) zwischen dem ersten Rechensystem (3) und dem zweiten Rechensystem (4) gemäß einem nicht-deterministischen Verfahren erfolgt.

7. Verfahren nach einem der vorangegangenen Ansprüche, bei dem das erste Rechensystem (3) innerhalb der technischen Anlage (2) und das zweite Rechensystem (4) in einer cloudbasierten Umgebung (5) realisiert sind.

8. Verfahren nach einem der vorangegangenen Ansprüche, bei dem eine Latenz der Kopplung (8) zwischen dem ersten Rechensystem (3) und dem zweiten Rechensystem (4) weniger als 10 Millisekunden, vorzugsweise weniger als 1 Millisekunde beträgt.

9. Verfahren nach Anspruch 6, bei dem eine Latenz des ersten Teils der Kopplung (8) zwischen dem ersten Rechensystem (3) und dem zweiten Rechensystem weniger als 1 Millisekunde beträgt, und bei dem eine Latenz des zweiten Teils der Kopplung zwischen dem ersten Rechensystem (3) und dem zweiten Rechensystem mehr als 10 Millisekunden, vorzugsweise mehr als 100 Millisekunden, beträgt.

10. Leitsystem (1) mit einem ersten Rechensystem (3) und einem zweiten Rechensystem (4), das dazu ausgebildet ist, ein Verfahren gemäß einem der Ansprüche 1 bis 9 durchzuführen.
